# EUROPEAN PATENT APPLICATION

(11) **EP 4 345 606 A1**
(43) Date of publication of application: **03.04.2024**
(21) Application number: 22913598.3
(22) Date of filing: 29.09.2022
(51) Int. Cl.: G06F 8/656

(54) **FIRMWARE REFRESHING METHOD AND APPARATUS, WIRELESS MODULE AND STORAGE MEDIUM**

(30) Priority: 28.12.2021 CN 202111628998
(71) Applicant: Rolling Wireless S.À R.L., 2540 Luxembourg (LU)
(72) Inventor: ZHU, Zhenfeng, Shenzhen, Guangdong 518055 (CN)
(74) Representative: J A Kemp LLP
(86) International application number: PCT/CN2022/122602
(87) International publication number: WO 2023/124333

(57) **Abstract**

The invention discloses a firmware refresh method, an apparatus, a wireless module, and a storage medium. The method includes: acquiring an operating parameter of a wireless module matched with firmware; and refreshing a file in the firmware based on the operating parameter and a preset refresh condition.

## Description

This application claims priority to Chinese Patent Application No. 202111628998.6, filed on December 28, 2021, and entitled "Firmware Refresh Method, Apparatus, Wireless Module, and Storage Medium", and the entire contents of which are incorporated herein by reference.

### FIELD

The present invention relates to the field of computers, and more particularly, to a firmware refresh method, an apparatus, a wireless module, and a storage medium.

### BACKGROUND

With the development of the concept of smart cars and the development of cellular wireless communication technology, the cellular wireless communication module has become a necessary component of new types of smart cars or electric cars, which enables the cars to access cellular wireless networks, thereby providing rich functions to the car owners.

The proper functioning of the wireless module relies on the full firmware stored in its storage medium, due to the physical properties of the NandFlash medium (flash memory), normally stored data may have a bit reversal phenomenon with storage time accumulating, reading of the stored data may also cause bit reversal of the stored data, and the complicated electrical environment and harsh operating environment may also cause bit reversal of the stored data, all of these let the integrity of data stored in the NandFlash face a great challenge.

When the integrity of the firmware is destroyed for various reasons, the normal function of the wireless module cannot be guaranteed, and even the wireless module cannot be started.

### SUMMARY

In a first aspect, the present invention relates to a firmware refresh method, including:
acquiring an operating parameter of a wireless module matched with firmware; and
refreshing a file in the firmware based on the operating parameter and a preset refresh condition.

In some embodiments, a combination of the operating parameter and the refresh condition includes at least one of:
the operating parameter includes a stability parameter indicating stability of the wireless module, the refresh condition includes that the stability parameter indicates that the wireless module is in a stable state; the operating parameter includes a priority level of a function currently operated by the wireless module, and the refresh condition includes that the priority level is lower than a priority level threshold.

In some embodiments, a combination of the stability parameter indicating stability of the wireless module and the stable state includes at least one of:
the stability parameter includes an operating temperature of the wireless module, and the stable state includes that the operating temperature is within a preset operating temperature range; and
the stability parameter includes a parameter indicating whether the wireless module is restarted, and the stable state includes that the wireless module is not restarted.

In some embodiments, when the priority level is lower than the priority level threshold, the function currently operated by the wireless module excludes dialing emergency call.

In some embodiments, the file is the Nth file in the firmware;
wherein refreshing the file in the firmware based on the operating parameter and the preset refresh condition includes:
when the operating parameter satisfies the refresh condition, reading the Nth file from a flash memory of the wireless module, checking the Nth file to acquire an object file, and storing the object file to a memory;
erasing an area of the flash memory, in which the Nth file is stored; and
writing back the target file to the area.

In some embodiments, the method further includes, after refreshing the file in the firmware based on the operating parameter and the preset refresh condition:
when the Nth file is determined to be not the last file in the firmware, updating N by N+1, and returning to execute the firmware refresh method.

In some embodiments, refreshing the file in the firmware based on the operating parameter and the preset refresh condition includes:
when the operating parameter does not meet the refresh condition, returning to execute the firmware refresh method after delaying a preset period of time.

In a second aspect, the present invention relates to a firmware refresh apparatus, including:
an acquiring unit, configured to acquire an operating parameter of a wireless module matched with firmware; and
a refresh unit, configured to refresh a file in the firmware based on the operating parameter and a preset refresh condition.

In a third aspect, the present invention relates to a wireless module, including:
a memory, configured to store a computer program; and
a processor, configured to execute a computer program stored in the memory to implement the firmware refresh method of the first aspect.

In a fourth aspect, the present invention relates to a computer-readable storage medium storing a computer program which, when executed by a processor, implements the firmware refresh method of the first aspect.

In some embodiments, the present invention acquires an operating parameter of a wireless module matched with firmware, and refreshes a file in the firmware based on the operating parameter and a preset refresh condition. Integrity in the firmware can be guaranteed by flushing the file in the firmware. Additionally, because refresh conditions are incorporated in the refresh process, the firmware refresh can be made more secure and stable, reducing the probability of firmware refresh failure.

### BRIEF DESCRIPTION OF THE DRAWINGS

The accompanying drawings, which are incorporated in and constitute a part of this specification, illustrate embodiments consistent with the present invention and together with the description, serve to explain the principles of the invention.

In order to illustrate the technical solutions of the present invention more clearly, the accompanying drawings which need to be used by the present invention will be simply introduced below, and it is obvious that for those of ordinary skill in the art, other drawings can also be acquired according to these drawings without paying creative labor.
FIG 1 is a flow diagram illustrating a firmware refresh method according to an embodiment of the present invention;
FIG 2 is yet another flow diagram illustrating the firmware refresh method according to an embodiment of the present invention;
FIG 3 is a structural diagram of a firmware refresh apparatus according to an embodiment of the present invention; and
FIG 4 is a structural diagram of a wireless module according to an embodiment of the present invention.

### DETAILED DESCRIPTION

In order to make the objectives, technical solutions and advantages of the embodiments of the present invention more clear, the technical solutions in the embodiments of the present invention will be clearly and completely described below in conjunction with the accompanying drawings in the embodiments of the present invention, and it is obvious that the described embodiments are part of the embodiments of the present invention, rather than all of the embodiments. Based on the embodiments in the present invention, all other embodiments obtained by those of ordinary skill in the art without making inventive labor, belong to the scope of protection of the present invention.

It should be understood that the various steps in the flow diagrams shown in the present invention are shown in sequence as indicated by the arrows but are not necessarily performed in sequence as indicated by the arrows. The steps are performed without a strict sequence limitation and may be performed in other sequences unless explicitly stated herein. Moreover, at least some of the steps in the drawings may include multiple sub-steps or multiple stages, these sub-steps or phases are not necessarily performed at the same time, but may be performed at different times, and the execution order is not necessarily sequential, but may be performed in rotation or alternation with other steps or at least part of sub-steps or phases of other steps.

In related technologies, the problem that the integrity of firmware is destroyed is usually solved by refresh. Specifically, the firmware is refreshed periodically to reduce the probability of firmware destruction caused by bit reversal. When the wireless module is operating for a certain time, a firmware refresh task is started, and the firmware is read out from the storage medium. The area to be written in the storage medium is erased, and the read firmware is written back to the storage medium.

However, in practice, the wireless module is not suitable for firmware refresh at all times. For example, when the operating parameter of the wireless module indicates the following conditions, the refresh operation of the firmware is at risk of operation failure, and therefore the refresh needs to be performed with great caution:
A. When the temperature is too high or too low (the operating temperature of the wireless module is beyond the normal operating range of NandFlash), the NandFlash stability is decreased, and when the NandFlash in the wireless module is read and written, the probability of failure is greatly increased, resulting in damage to the firmware.
B. When the wireless module is performing important operations, for example, when a car accident occurs and an e-call (emergency call) is made, the electrical environment may be unstable while refreshing the firmware may cause the firmware to be destroyed or even the subsequent e-call function to become unusable, which may have serious consequences that are unacceptable in the design of in-vehicle software.
C. The firmware may be destroyed when the wireless module performs a normal restart as the firmware refresh has not been completed.

In order to facilitate understanding of embodiments of the present application, some of the terms referred to in the present application are explained below.

Firmware (FW): A software package burned into the flash memory by the manufacturer to provide software functionality for the module.

E-call (Emergency call): At the time of a car accident, the in-vehicle system automatically dials an emergency call while sending information about the car accident to a call center through a voice channel.

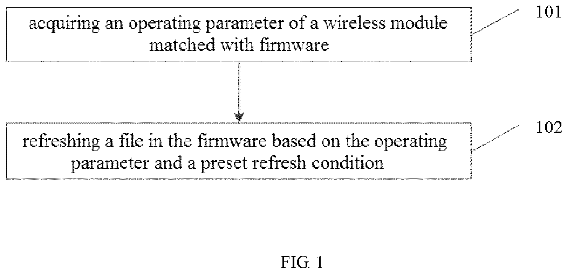

In order to reduce the occurrence of refresh failure when firmware is refreshed in the related art, an embodiment of the present invention provides a firmware refresh method, as shown in FIG 1, which may include the following steps:
Step 101, acquiring an operating parameter of a wireless module matched with firmware; and
Step 102, refreshing a file in the firmware based on the operating parameter and a preset refresh condition.

In certain embodiments, the file in the firmware is refreshed immediately when the operating parameter satisfies a refresh condition; when the operating parameter does not satisfy the refresh condition, the operating parameter of the wireless module is re-acquired after delaying a preset period of time, and the file of the firmware is refreshed based on the re-acquired operating parameter and the preset refresh condition.

It should be understood that the preset time period herein may be set manually based on experience, and this embodiment is not particularly limited thereto.

In the application, the periodic refresh mode can be set to reduce the probability of firmware destruction caused by bit reversal of firmware, so that when the refresh time point is determined, the operating parameter of the wireless module can be acquired, and the file in the firmware can be refreshed based on the operating parameter and refresh condition.

In some embodiments, the preset refresh condition indicates that the wireless module is in normal operation.

In an application, when the wireless module is in normal operation, the stability of the wireless module is higher. In general, the wireless module is in a stable state and the priority level of the function that the wireless module operates is low. At this time, the wireless module will not have the following conditions shown in related technologies: the temperature of the wireless module is too high or too low, the wireless module is performing important operations, and the wireless module is restarting, so the firmware in NandFlash can be refreshed.

In some embodiments, a combination of the operating parameter and the refresh condition includes at least one of the following: the operating parameter includes a stability parameter indicating stability of the wireless module, the refresh condition includes that the stability parameter indicates that the wireless module is in a stable state; the operating parameter includes a priority level of a function currently operated by the wireless module, and the refresh condition includes that the priority level is lower than a priority level threshold.

It should be understood that there may be three ways for understanding the combination of the above operating parameter and refresh condition:
When a stability parameter indicating stability of the wireless module exists in the operating parameter, a refresh condition that the stability parameter indicates that the wireless module is in a stable state is employed to determine whether the operating parameter satisfies the refresh condition. Whether the operating parameter satisfies the refresh condition is determined by using a refresh condition that the priority level is lower than a priority level threshold when there is a priority level in the operating parameter that indicates a function currently operated by the wireless module. When there is both a stability parameter indicating the stability of the wireless module and a priority level indicating a function currently operated by the wireless module in the operating parameter, the stability parameter is determined by using a refresh condition that the stability parameter indicates that the wireless module is in a stable state, and the priority level is determined by using a refresh condition that the priority level is lower than the priority level threshold.

In an application, the priority level threshold may be a specific priority level value or a serial number indicating the order in the priority level ranking, depending on the actual needs. In either case, however, the priority level threshold may be set manually based on experience or as needed, etc., and the present embodiment is not particularly limited thereto.

It should be understood that the wireless module may perform a number of functions. A priority level value may be set in advance for each function in the wireless module during actual operation, and a correspondence relationship of the function identifier with the priority level value is established, when a function operating in the wireless module is determined, the function identifier of the function is used to query the correspondence relationship to obtain a priority level value of the function, and the priority level value is compared with the priority level threshold to determine whether the priority level of the function is lower than the priority level threshold. Wherein, the priority level of the function is determined to be lower than the priority level threshold when the priority level value of the function is lower than the priority level threshold.

In this scenario, in one example, four functions A, B, C, and D are deployed in the wireless module, the A function has a priority level value of 100, the B function has a priority level value of 200, the C function has a priority level value of 300, and the D function has a priority level value of 400, a higher priority level value indicates a higher priority level of the function. When the priority level value indicating the priority level threshold is 300, the functions having the priority levels lower than the priority level threshold among the above four functions may be determined as the function A, function B, and function C.

In an application, the priority level ranking of each function can be generated based on the priority level value set for each function in the wireless module, a priority level serial number of each function is obtained based on the priority level ranking, and the priority level serial number of each function is compared to the priority level threshold to determine whether the priority level of the function is higher than the priority level threshold. Wherein, the priority level of the function is determined to be higher than the priority level threshold when the priority level serial number of the function is higher than a serial number in the priority level threshold.

In this scenario, in one example, four functions A, B, C, D are deployed in the wireless module, wherein the priority level value of the A function is 100, the priority level value of the B function is 200, the priority level value of the C function is 300, the priority level value of the D function is 400, here, the higher priority level value indicates the higher priority level of the function, so it can be determined that the above four functions are prioritized as D-C-B-A. Further, it can be determined that the priority level serial numbers of the four functions can be: the priority level serial number of the function D is 4, the priority level serial number of the function C is 3, the priority level serial number of the function B is 2, and the priority level serial number of the function A is 1. When the serial number in the priority level threshold is 3, the functions having priority levels lower than the priority level threshold among the above four functions may be determined as the function A, function B, and function C.

In an application, functions relating to the personal safety of the user of the automotive device to which the wireless module is applied are usually set to have a higher priority level, and the priority levels of such functions are usually higher than a priority level threshold. For example, when the function operated by the wireless module is an e-call function, it may be determined that the priority level is not lower than the priority level threshold.

It should be understood that, when the settings are actually applied, it is not limited that the operating parameter must be acquired and the refresh condition must be set according to the above combination. According to actual needs, the operating parameter can be acquired and the refresh condition can be set separately.

In some embodiments, NandFlash stability may decrease when the wireless module is operating at a too high or too low temperature beyond the normal temperature range of NandFlash; and when the wireless module is restarted, the stability of the wireless module is not guaranteed, so that the operation temperature of the wireless module and the parameter indicating whether the wireless module is restarted are referred to as the stability parameter of the wireless module. Accordingly, the stable state in the refresh condition may include that the operating temperature is within a preset operating temperature range and the wireless module is not restarted.

In some embodiments, a combination of a stability parameter indicating stability of the wireless module and a stable state includes: the stability parameter includes an operating temperature of the wireless module, and the stable state includes that the operating temperature is within a predetermined operating temperature range; the stability parameter includes a parameter indicating whether the wireless module is restarted, and the stable state includes that the wireless module is not restarted.

It should be understood that the preset operating temperature range may be set manually based on experience or manually according to actual needs, and this embodiment is not particularly limited thereto.

In an application, a plurality of files are typically included in the firmware, when the files in the firmware are refreshed, the refresh of all of the files in the firmware may be completed at once after the operating parameter is determined to satisfy a refresh condition.

It should be understood that the one-time refresh herein may be either a parallel refresh of a plurality of files or a serial operation, i.e., the refresh of a plurality of files one by one, and the present embodiment is not particularly limited thereto.

In an application, considering that the refresh process for each file typically takes 1 to 2 seconds, it may therefore happen that before a file is refreshed, the operating parameter of the wireless module satisfies the refresh condition, and after the file is refreshed, the operating parameter of the wireless module can not satisfy the refresh condition, for example, the wireless module is restarted, and the wireless module is dialing an e-call. Therefore, before each file in the firmware is refreshed, the operating parameter of the wireless module is acquired, and the file in the firmware is refreshed based on the acquired operating parameter and the refresh condition.

In some embodiments, when the file in the firmware is the Nth file, based on the operating parameter and the refresh condition, the specific implementation of file refresh in the firmware may be:
When the operating parameter meets the refresh condition, the Nth file is read from the flash memory of the wireless module, the Nth file is corrected to obtain an object file, and the object file is stored to the memory; an area in the flash memory where the Nth file is stored is erased; the target file in the memory is written back to the area.

In certain embodiments, after flushing the Nth file in the firmware, it is also possible to judge whether the Nth file is the last file of the firmware, and when it is determined that the Nth file is not the last file in the firmware, N is updated by N + 1, and the firmware refresh method is returned to be executed, i.e., the operating parameter of the wireless module is reacquired, and the N+1th file in the firmware is refreshed based on the operating parameter and the refresh condition.

It should be understood that the files in the firmware may be labeled based on their partitions in the firmware, and then whether the file is the last file in the firmware is determined based on the label.

It should be understood that different partitions in the firmware correspond to different storage addresses, and thus files in the firmware may be labeled in order of storage addresses from small to large, or in order of storage addresses from large to small, and this embodiment is not particularly limited.

In the technical solution provided by the embodiment of the present invention, the operating parameter of the wireless module matched with the firmware is acquired; the file in the firmware is refreshed based on the operating parameter and the preset refresh condition. Integrity in the firmware can be guaranteed by flushing the files in the firmware. Additionally, because the refresh condition is incorporated in the refresh process, the firmware refresh can be made more secure and stable, reducing the probability of firmware refresh failure.

In the following, the technical solution of the present application is explained by using a wireless module as a wireless cellular module:
Pre-conditions for solution implementation:
1. The wireless cellular module has deployed a firmware periodic refresh function;
2. When the wireless cellular module is refreshed, the granularity unit is an individual file in the firmware, and the files are refreshed one by one.

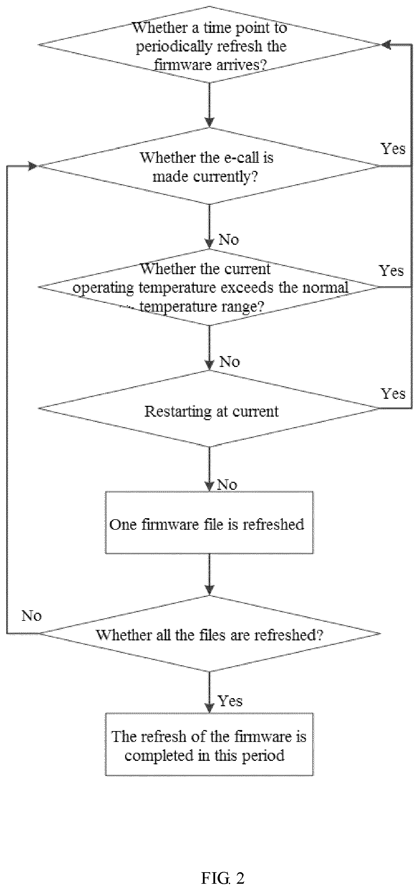

A specific workflow is shown in FIG 2:
1) a time point arrives for the wireless cellular module to periodically refresh the firmware;
2) the current e-call function state is checked, firmware refresh is delayed if an e-call is being made, otherwise a next step is performed;
3) the current operating temperature of the wireless cellular module is checked, the firmware refresh is delayed if the temperature is too high or too low, otherwise a next step is performed;
4) whether the wireless cellular module is currently restarted is checked, if it is currently restarted, firmware refresh is delayed, otherwise a next step is performed;
5) the refresh of one firmware file is completed;
6) if all the files in the firmware are refreshed, 7) is executed, otherwise 2) is executed; and
7) the refresh of the firmware is completed, the state in 1) is returned to wait for the next refresh cycle to come.

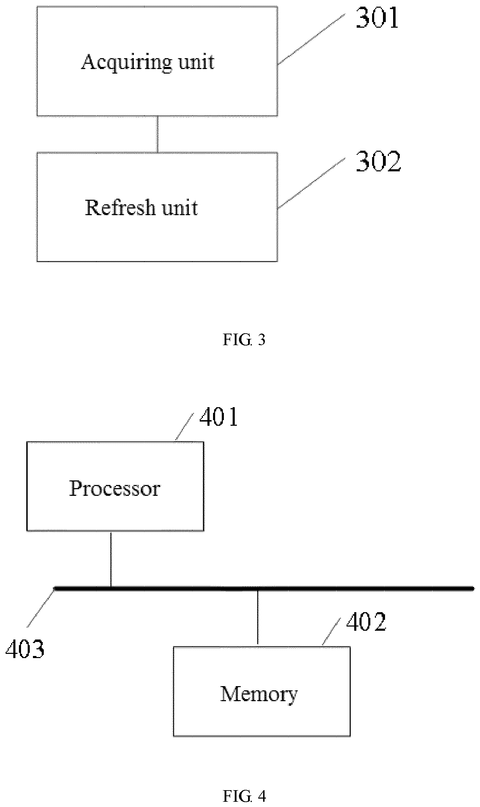

Based on the same concept, a firmware refresh apparatus is provided in an embodiment of the present invention. The specific implementation of the apparatus can refer to the description of the method embodiment section, and the repetition will not be repeated. As shown in FIG 3, the apparatus mainly includes:
an acquiring unit 301, configured to acquire an operation parameter of the wireless module matched with the firmware; and
a refresh unit 302, configured to refresh a file in the firmware based on the operation parameter and a preset refresh condition.

In certain embodiments, a combination of operating parameter and refresh condition includes at least one of:
the operating parameter includes a stability parameter indicating stability of the wireless module, the refresh condition includes that the stability parameter indicates that the wireless module is in a stable state; the operating parameter includes a priority level of a function currently operated by the wireless module, and the refresh condition includes that the priority level is lower than a priority level threshold.

In some embodiments, a combination of the stability parameter indicating stability of the wireless module and the stable state includes at least one of:
the stability parameter includes an operating temperature of the wireless module, and the stable state includes that the operating temperature is within a preset operating temperature range; and
the stability parameter includes a parameter indicating whether the wireless module is restarted, and the stable state includes that the wireless module is not restarted.

In some embodiments, when the priority level is lower than the priority level threshold, the function currently operated by the wireless module excludes dialing emergency call.

In some embodiments, the file is the Nth file in the firmware;
the refresh unit 302 is configured to:
when the operation parameter satisfies the refresh condition, read the Nth file from a flash memory of the wireless module, check the Nth file to obtain an object file, and store the object file to a memory;
erase an area of the flash memory, in which the Nth file is stored; and
write back the target file to the area.

The apparatus is further configured to:
after refreshing the file in the firmware based on the operating parameter and the preset refresh condition, when the Nth file is determined to be not the last file in the firmware, update N by N+1, and return to execute the firmware refresh method.

In some embodiments, the refresh unit 302 is configured to:
when the operating parameter does not meet the refresh condition, return to execute the firmware refresh method after delaying a preset period of time.

Based on the same concept, a wireless module is also provided in an embodiment of the present invention, as shown in FIG 4, the wireless module mainly includes a processor 401, a memory 402, and a communication bus 403, wherein the processor 401 and the memory 402 perform communication with each other through the communication bus 403. Wherein, the memory 402 has stored therein a computer program executable by the processor 401, and the processor 401 executes the program stored in the memory 402 to implement the following steps:
an operating parameter of the wireless module matched with the firmware is acquired; and
the file in the firmware is refreshed based on the operating parameter and the preset refresh condition.

The communication bus 403 mentioned in the wireless module may be a Peripheral Component Interconnect (PCI) bus, an Extended Industry Standard Architecture (EISA) bus, or the like. The communication bus 403 may be divided into an address bus, a data bus, a control bus, and the like. For ease of illustration, only one bold line is shown in FIG 4, but does not indicate only one bus or one type of bus.

The memory 402 may include a Random Access Memory (RAM) or may include a non-volatile memory, such as at least one disk memory. Optionally, the memory may also be at least one storage device located remotely from the aforementioned processor 401.

The processor 401 may be a general purpose processor, including a Central Processing Unit (CPU), a Network Processor (NP), or the like, and may be a Digital Signal Processing (DSP), an Application Specific Integrated Circuit (ASIC), a Field-Programmable Gate Array (FPGA) or other programmable logic devices, discrete gates or transistor logic devices, or discrete hardware components.

In yet another embodiment of the present invention, there is also provided a computer-readable storage medium, the computer-readable storage medium having stored therein a computer program which, when operating on a computer, causes the computer to perform the firmware refresh method described in the above embodiments.

In the above-described embodiments, it may be implemented in whole or in part by software, hardware, firmware, or any combination thereof. When implemented in software, it may be implemented in whole or in part in the form of a computer program product. The computer program product includes one or more computer instructions. When the computer instructions are loaded and executed on a computer, processes or functions according to embodiments of the present application are generated in whole or in part. The computer may be a general purpose computer, a special purpose computer, a computer network, or other programmable devices. The computer instructions may be stored in a computer readable storage medium, or transmitted from one computer-readable storage medium to another computer-readable storage medium, for example, the computer instructions may be transmitted from one website, computer, server, or data center via a wired mode (e.g., a coaxial cable, an optical fiber, a digital subscriber line (DSL)) or a wireless mode (e.g., infrared, microwave, etc.) to another website, computer, server, or data center. Such computer-readable storage medium can be any available medium that can be accessed by a computer or a data storage device containing an integration of one or more available media, such as a server, a data center, etc. The usable medium may be a magnetic medium (e.g., a floppy disk, a hard disk, a magnetic tape, etc.), an optical medium (e.g., a DVD), or a semiconductor medium (e.g., a solid state disk), etc.

It should be noted that relational terms such as "first" and "second" are used herein only to distinguish one entity or operation from another, and do not necessarily require or imply any such actual relationship or order between these entities or operations. Moreover, the terms "including", "includes" or any other variation thereof are intended to encompass non-exclusive inclusion, so that a process, method, article or equipment that includes a set of elements includes not only those elements but also other elements that are not explicitly listed or includes elements that are inherent to such process, method, article or equipment. In the absence of further limitations, an element defined by the phrase "includes an..." does not preclude the existence of another identical element in the process, method, article or equipment in which the element is included.

The foregoing description is only specific embodiments of the present invention, enabling those skilled in the art to understand or implement the present invention. Various modifications to these embodiments will be readily apparent to those skilled in the art, and the generic principles defined herein may be implemented in other embodiments without departing from the spirit or scope of the invention. Thus, the present invention is not intended to be limited to the embodiments shown herein but is to be accorded the widest scope consistent with the principles and novel features disclosed herein.

## Claims

1. A firmware refresh method, comprising:
acquiring an operating parameter of a wireless module matched with firmware; and
refreshing a file in the firmware based on the operating parameter and a preset refresh condition.

2. The method according to claim 1, a combination of the operating parameter and the refresh condition comprises at least one of:
the operating parameter comprises a stability parameter indicating stability of the wireless module, the refresh condition comprises that the stability parameter indicates that the wireless module is in a stable state; the operating parameter comprises a priority level of a function currently operated by the wireless module, and the refresh condition comprises that the priority level is lower than a priority level threshold.

3. The method according to claim 2, a combination of the stability parameter indicating stability of the wireless module and the stable state comprises at least one of:
the stability parameter comprises an operating temperature of the wireless module, and the stable state comprises that the operating temperature is within a preset operating temperature range; and
the stability parameter comprises a parameter indicating whether the wireless module is restarted, and the stable state comprises that the wireless module is not restarted.

4. The method according to claim 2, when the priority level is lower than the priority level threshold, the function currently operated by the wireless module excludes dialing emergency call.

5. The method according to claim 1, the file is the Nth file in the firmware;
wherein refreshing the file in the firmware based on the operating parameter and the preset refresh condition comprises:
when the operating parameter satisfies the refresh condition, reading the Nth file from a flash memory of the wireless module, checking the Nth file to obtain an object file, and storing the object file to a memory;
erasing an area of the flash memory, in which the Nth file is stored; and
writing back the target file to the area.

6. The method according to claim 5, further comprising, after refreshing the file in the firmware based on the operating parameter and the preset refresh condition:
when the Nth file is determined to be not the last file in the firmware, updating N by N+1, and returning to execute the firmware refresh method.

7. The method according to claim 1, wherein refreshing the file in the firmware based on the operating parameter and the preset refresh condition comprises:
when the operating parameter does not meet the refresh condition, returning to execute the firmware refresh method after delaying a preset period of time.

8. A firmware refresh apparatus, comprising:
an acquiring unit, configured to acquire an operating parameter of a wireless module matched with firmware; and
a refresh unit, configured to refresh a file in the firmware based on the operating parameter and a preset refresh condition.

9. A wireless module, comprising:
a memory, configured to store a computer program; and
a processor, configured to execute a computer program stored in the memory to implement the firmware refresh method according to any one of claims 1-7.

10. A computer-readable storage medium storing a computer program which, when executed by a processor, implements the firmware refresh method according to any one of claims 1-7.
